# EUROPEAN PATENT APPLICATION

(11) **EP 3 125 399 A1**
(43) Date of publication of application: **01.02.2017**
(21) Application number: 15769766.5
(22) Date of filing: 26.03.2015
(51) Int. Cl.: H02J 7/00, H01M 10/44

(54) **ELECTRICITY STORAGE SYSTEM AND METHOD FOR CONTROLLING DISCHARGING OF SAID ELECTRICITY STORAGE SYSTEM**

(30) Priority: 28.03.2014 JP 2014068921
(71) Applicant: NEC Corporation, Tokyo 108-8001 (JP); NEC Engineering, Ltd., Tokyo 140-0002 (JP)
(72) Inventor: YOSHIDA, Hiroshi, Tokyo 108-8001 (JP); HAYASHI, Shuuhei, Tokyo 140-0002 (JP); NAGASE, Motoharu, Tokyo 140-0002 (JP)
(74) Representative: Vossius & Partner Patentanwälte Rechtsanwälte mbB
(86) International application number: PCT/JP2015/059393
(87) International publication number: WO 2015/147171

(57) **Abstract**

The present invention achieves a balanced discharging in a power storage system having a plurality of storage batteries connected in parallel. A power storage system comprises a plurality of storage batteries 100a-100f connected in parallel, a storage battery device 120 at least setting an output voltage value at discharge to each of the plurality of storage batteries 100a-100f. The storage battery device 120 includes a discharge control circuit 121 configured to assign at least one storage battery of the plurality of storage batteries for a master based on at least a battery residual capacity or a battery voltage and set the output voltage value so that the output voltage value differs between the master and the storage battery.

## Description

### Technical Field

The present invention relates to a power storage system having a plurality of storage batteries connected in parallel, and a discharge control method of the power storage system.

### Background Art

Conventionally, as a power system, a battery storage device using a plurality of storage batteries is known. In this type of battery power storage device, charging and discharging of the storage battery is performed as required. At this time, usually, all storage batteries are charged and discharged at once.

When discharging the storage battery, a DC / DC converter for controlling the discharge sets an output current (upper limit) and an output voltage for each storage battery. However, if the DC / DC converter is not sufficient in accuracy as a device, a difference occurs in the output voltage of each storage battery. Since the discharge amount varies according to the output voltage, a difference in the output voltage caused between the storage batteries produces a difference in the discharge amount. As a result, battery residual capacities among the storage batteries are uneven at each time the storage batteries are discharged.

As a system to solve this problem, Patent Literature 1 (Japanese Patent Laid-Open No. 2011-188700) describes that a current value of a discharge current of two systems of battery units adjacent to each other is controlled based on the difference of the charging statuses of the battery units (for example, switching the current value of the discharge maximum current in two steps).

### Citation List

### Patent Literature

Patent Literature 1: Japanese Patent Laid-Open No. 2011-188700

### Summary of Invention

### Technical Problem

However, even if only the current values are switched as the system described in Patent Literature 1, the storage battery that is set a large current value do not always discharge more depending on a state where a load varies.
It is difficult to control current value of the discharge current evenly while the load varies.

In addition, although the discharge current is controlled based on the difference of the charge status of the adjacent storage battery units, in this case, it is considered that the difference exceeds a threshold in total even if the difference between the adjacent storage battery units is equal to or less than the threshold. For example, 10 storage battery units connected in parallel are considered. In these units, there is a possibility that the difference of charging status between two storage battery units at both ends reaches up to 10%, even if the difference of charging status between two adjacent storage battery units is 1%.

An object of the present invention is to achieve a balanced discharging in a power storage system having a plurality of storage batteries connected in parallel.

### Solution to Problem

A power storage system according to the present invention is a power storage system which supplies power to a load by discharging the power from a storage battery, comprising:
a plurality of storage batteries connected in parallel,
a storage battery device at least setting an output voltage value at discharge to each of the plurality of storage batteries, and
wherein said storage battery device includes,
a discharge control circuit configured to assign at least one storage battery of the plurality of storage batteries for a master based on at least a battery residual capacity or a battery voltage and set the output voltage value so that the output voltage value differs between the master and the other storage batteries.

A discharge control method of the present invention is a discharge control method of a plurality of storage batteries connected in parallel, the method comprises steps of:
assigning at least one storage battery of the plurality of storage batteries to a master based on at least a battery residual capacity or a battery voltage, and
setting at least the output voltage value to each of the plurality of storage batteries so that the output voltage value differs between the master and the other storage battery.

### Advantageous Effects of Invention

According to the present invention, during discharge from a plurality of storage batteries connected in parallel, a balance of discharge between the storage batteries connected in parallel can be made depending on the change of the battery residual capacity.

### Brief Description of Drawings

FIG. 1 is a block diagram of the power storage system explaining the basic idea according to an embodiment of the present invention.
FIG. 2 is a block diagram of the power storage system explaining in more detail the discharge control according to an embodiment of the present invention.
FIG. 2A is a block diagram showing an example of the internal configuration of the discharge control circuit shown in FIG. 2.
FIG. 3 is a flowchart showing an example of a discharge control by the power storage system shown in FIG. 2.
FIG. 4 is a flowchart showing the discharge control procedure according to another embodiment of the present invention.
FIG. 5 is a flowchart showing an example of a battery voltage balance confirmation step shown in FIG. 5.
FIG. 6 is a flowchart showing an example of an output voltage value updating step shown in FIG. 4.

### Description of Embodiments

The present invention relates to a power storage system for controlling charge to a storage battery and discharge from the storage battery. The present invention has a characteristic in the control of the discharge and the control of the charge may be the same as a conventional system. Therefore, in the following description, the configuration and operation relating to the discharge will be described and the configuration and operation relating to the charge will be omitted.

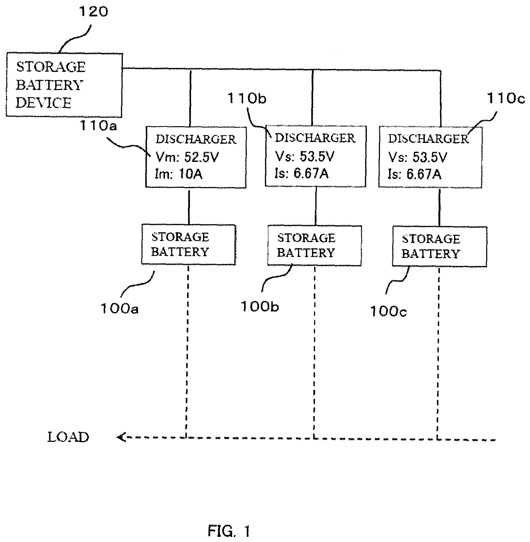

Firstly, a basic concept of discharge control according to an embodiment of the present invention will be described by referring to FIG. 1.

Power storage system shown in FIG. 1 includes a plurality of storage batteries 100 a-100c connected in parallel, a plurality of dischargers 110 a-110c connected to the storage batteries 100 a-100c respectively, and a storage battery device 120.

The storage battery device 120 controls the setting of each discharger 110 a-110c, and each of storage batteries 100 a-100c is discharged at output current upper limit value and output voltage value according to the setting of the dischargers 110 a-110c that are connected thereto. The storage battery device 120 assigns a plurality of storage batteries 100 a-100c for one of a master and a slave and sets the output current upper limit value and the output voltage values to each of respective dischargers 110a-110c in accordance with the assignment.

Here, a case when the storage battery 100a is assigned for the master and the other storage batteries 100b, 100c are assigned for the slave is assumed. As shown in FIG. 1, the storage batteries 100b, 100c assigned for the slave are set a voltage value (for example, 53.5V) based on an assumed load power as an output voltage value Vs and also they are set a value (for example, 6.67V) approximately equally allocated the current value (for example, 20 A) to the number of the storage batteries based on the load power as an output current upper limit value Is. The storage battery 100a assigned for the master is set a maximum output current upper limit value (for example, 10A) and an output voltage value Vm (for example, 52.5V) lower than that of the storage batteries 100b, 100c assigned for the slave.

A difference occurs in discharge amount from each storage batteries 100a-100c, when the storage batteries are discharged in a state that a voltage difference is created between the storage battery 100a assigned for the master and the storage batteries 100b, 100c assigned for the slave as described above. More specifically, since the storage batteries 100b, 100c assigned for the slave are set the output voltage value Vs higher than that of the storage battery 100a assigned for the master, the storage batteries 100b, 100c are preferentially discharged within the set output current upper limit value Is. On the other hand, the storage battery 100a set low output voltage value Vm discharges current so as to compensate remaining current required for the load to absorb a load variation since the output current value Im is set to the maximum. That is, the storage batteries 100b, 100c assigned for the slave are preferentially discharged when the load is lower than assumed, while the discharge amount of the slave is stopped at the output current upper limit value Is (the output voltage value of the slave is automatically-adjusted to become lower) and discharge is carried out more from the storage battery 100a assigned for the master.

There are two ways as a method of assigning storage battery for the master:
(1) assigning the storage battery having the largest battery residual capacity.to the master, and
(2) assigning the storage battery having the smallest battery residual capacity.to the master,
and both are changed depending on the residual capacity and the discharge amount of each storage battery and executed regularly.

Basically, in a situation where the storage battery assigned for the master is more discharged, assigning the storage battery having the largest battery residual capacity to the master allows more discharge from the storage battery having large battery residual capacity and less discharge from the storage battery having small battery residual capacity. This enables each storage battery to discharge in a balanced manner such that a difference of the battery residual capacities between the storage batteries is reduced. On the other hand, in a situation where the storage battery assigned for the slave is more discharged, the storage battery having the smallest battery residual capacity is assigned for the master.

However, a magnitude relation of the battery residual capacities between the storage battery assigned for the master and the other storage batteries may be changed before finishing the discharge depending on the discharge amount and the battery residual capacity of each storage battery. If the discharge is continued in this situation, the difference of the battery residual capacities between the master and the other storage batteries is increased.

Furthermore, even if the load power is changed during the discharge, the storage battery having smaller battery residual capacity is discharged more preferentially than the storage battery having larger battery residual capacity, since a magnitude relation between the discharge amount from the storage battery assigned for the master and the discharge amount from the other storage batteries (the storage batteries assigned for the slave) is changed. As a result, the difference of the battery residual capacities between the master and the other storage batteries is increased.

Therefore, it is preferable to measure the battery residual capacity and the discharge amount of each storage battery in a predetermined period and review the storage battery to be assigned for the master for each measurement. The measurement period can, for example, be 30 to 120 seconds.

As a specific reviewing procedure, for example, if the discharge amount from the storage battery having the largest battery residual capacity is the smallest, the storage battery having the smallest battery residual capacity is assigned for the master when the storage battery having the largest battery residual capacity is the master and the storage battery having the largest battery residual capacity is assigned for the master when the storage battery having the largest battery residual capacity is not the master.

On the other hand, if the discharge amount from the storage battery having the largest battery residual capacity is not the smallest, the storage battery having the largest battery residual capacity is assigned again for the master when the storage battery having the largest battery residual capacity is the master and the storage battery having the smallest battery residual capacity is assigned for the master when the storage battery having the largest battery residual capacity is not the master.

In other words, it is possible to discharge each storage battery in a balanced manner such that a difference of the battery residual capacities between the storage batteries is reduced even if the load variation is occurred during the discharge by measuring the battery residual capacity and the discharge amount of each storage battery in a predetermined period and assigning the storage battery having the largest battery residual capacity or the smallest battery residual capacitor depending on the measuring result.

As described above, in the present embodiment, the procedure for assigning the master is reviewed periodically while the difference in the discharge amount is produced daringly between the storage batteries assigned for the master and the slave, whereby the balanced discharge between the storage batteries is accomplished in the power storage system including a plurality of storage batteries connected in parallel as the result.

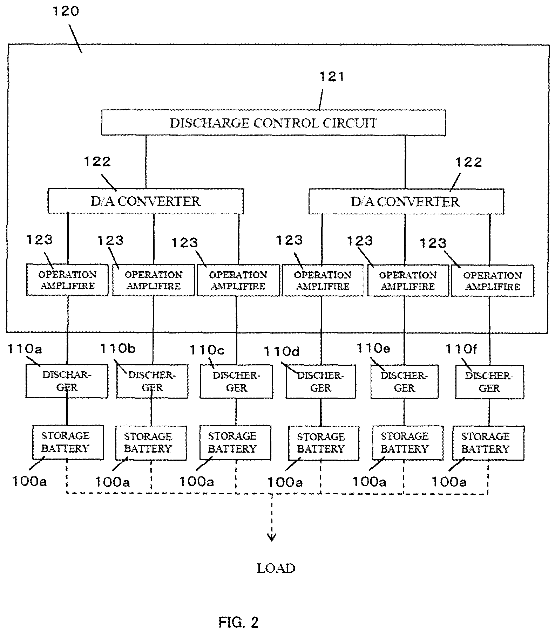

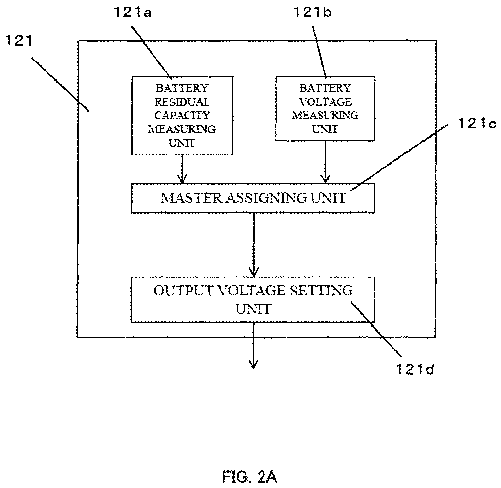

Next, one embodiment of the present invention will be described in more detail with reference to FIG. 2.

Power storage system shown in FIG. 2 comprises six storage batteries 100a--100f. Dischargers 110a-110f are connected to the storage batteries 100a-100f respectively. Each storage battery 100 a-100f is individually controlled for its current and voltage during discharging by dischargers 110a-110f. A storage battery device 120 is connected to the dischargers 110 a-110f and the storage battery device 120 supplies power to the load power by discharging six storage batteries 100a-100f.

As the storage battery 100 a-100f, any type of storage battery can be used. In particular among them, a lithium ion secondary battery can be preferably used. In addition, each storage batteries 100 a-100f may be composed of single cell or a battery pack including a plurality of cells. The battery pack can include a plurality of cells connected in series, a plurality cells connected in parallel or a composite unit including a plurality of parallelly connected cell unit composed of a plurality of cells connected in series.

The storage battery device 120 includes a discharge control circuit 121, two D / A (Digital/Analog) converters 122 and six operational amplifiers 123. The discharge control circuit 121 can be constituted by using a microcomputer including a CPU (Central Processing Unit), a ROM (Read Only Memory), a RAM (Random Access Memory), an I / O (Input / Output) interface and the like. Predetermined program is recorded in the ROM of such microcomputer. Various operations can be performed by the CPU depending on the program, whereby the discharge control circuit 121 can execute a discharge control of the storage batteries which will be described later. D / A converters 122 convert digital signals into analog signals and send the converted signals to the operational amplifiers 123. Operational amplifiers 123 amplify the analog signals sent from the D/A converters 122 and send the amplified signals to the dischargers 110a-110f. In the storage battery device 120 shown in FIG.2, two D/A converters 122 are used. However, the number of D/A converter 122 can be increased or decreased depending on the number of channels of the D / A converter 122.

As shown in FIG. 2A, the discharge control circuit 121 may include a battery residual capacity measuring unit 121a, a battery voltage measuring unit 121b, a master assigning unit 121c and the output voltage value setting unit 121d. Battery residual capacity measurement unit 121a measures the battery residual capacity of each storage battery 100a-100f. The battery voltage measuring unit 121b measures the battery voltage of each storage battery 100a-100f. The discharge control circuit 121 may include only one of the battery residual capacity measurement unit 121a and the battery voltage measuring unit 121b.

The master assigning unit 121c assigns one or more storage battery among the storage batteries 100a-100f for the master based on the battery residual capacity measured by the battery residual capacity measuring unit 121a or the battery voltage measured by the battery voltage measuring unit 121b, in accordance with the procedure which will be described later more detail.
Output voltage value setting unit 121d sets the output voltage value of each storage battery such that the output values differ between the master assigned by the master assigning unit 121c and the other storage batteries.

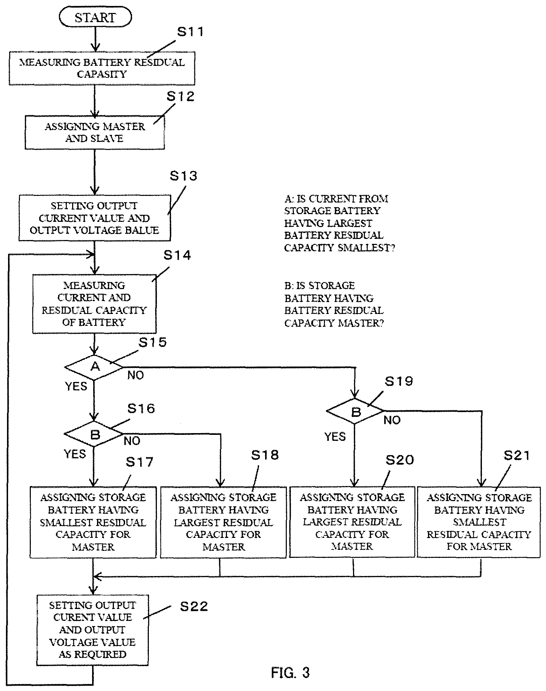

Next, an example of a discharge control by the power storage system shown in FIG. 2 will be described with reference to the flowchart shown in FIG.3.

First, the battery residual capacity of each storage battery 100a-100f is measured (S11). Assuming that the battery residual capacity of the storage battery 100a was the largest, for example, as a result, the discharge control circuit 121, then, assigns the storage battery 100a having the largest battery residual capacity for the master and assigns the remaining five storage batteries 100b-100f for the slave as an initial setting (S12). Here, the battery residual capacity of the storage battery is generally represented by SOC (State of Charge) and can be calculated from the battery voltage of the battery or by addition and/or subtraction the charge amount and the discharge amount of the storage battery. In a calculation of the battery residual capacity from the battery voltage, it is difficult to calculate exactly the battery residual capacity when there is a condition in which the voltage variation during the discharge is small. In such condition, it is preferable to calculate by addition and/or subtraction the charge amount and the discharge amount of the storage battery.

After assigning the storage batteries 100a-100f for the master and the slave, the discharge control circuit 121 measures the output upper limit value and the output voltage of the storage battery 100a-100f for each master and slave and sets the measured values to a register of the D/A converter (S13).

It is assumed that the current value required for the load is 30A based on an assumed power amount required for the load and the maximum discharge current value of the storage batteries 100a-100f is 10A. In this case, the storage batteries 100a-100f are set 5A for the output current upper limit value, that is a value divided equally the current value required for the load into six storage batteries 100a-100f. In addition, output current upper limit value of the master storage battery 100a is set to 10A that is the maximum current value of the storage battery 100a.

As for the output voltage value, the voltage value obtained from the assumed power amount required for the load is set to the storage batteries 100b-100f assigned for the slave as the output voltage value and the voltage value lower than that of the storage batteries 100b-100f is set to the storage battery 100a assigned for the master. For example, when the output voltage value of the storage batteries 100b100f assigned for the slave is 48V, the output voltage value of the storage battery 100a assigned for the master may be set to 47V that is lower than that of the slave.

The output voltage value and output current upper limit value to be set are preferably optimized depending on a power and a circuit configuration required for the load, a variation range of the load and the like.

When the output voltage value and the output current upper limit value of the storage batteries 100a-100f is set to the D/A converters 122, the dischargers 110a-110f start the discharge of the storage batteries 100a-100f according to the setting. Since different output voltage values are set between the master and the slave, the storage batteries 100b-100f having high output voltage value are preferentially discharged within the set output current upper limit value. On the other hand, the power is supplied to the storage battery 100a set low output voltage value so as to compensate remaining current required for the load to absorb the load variation since the output voltage value is set to the maximum. That is, the storage batteries 100b-100f are preferentially discharged when the load is lower than assumed, while the discharge amount of the slave is stopped at the output current upper limit value (the output voltage value of the slave is automatically-adjusted to become lower) and discharge is carried out more from the storage battery 100a assigned for the master.

As for the currents output from the storage batteries 100a-100f during the discharge, the master is larger than the slave in some case and the slave is larger than the master in some case due to factors such as the state of a power supplying device (the load), a resolution of the register of the D/A converter and so on. Therefore, the battery residual capacity and the actual current values of the storage batteries 100a-100f are measured (S14) and the assignment of the master is changed under certain conditions based on the measured result as follows.

The discharge control circuit 121 determines whether the actual current value of the storage battery having the largest battery residual capacity is the smallest or not after the measurement of the battery residual capacity and the actual current value of the storage batteries 100a-100f (S15). When the actual current value of the storage battery having the largest battery residual capacity is the smallest, the discharge control circuit 121 determines whether the storage battery having the largest battery residual capacity is assigned for the master at present or not (S16). When the storage battery having the largest battery residual capacity is assigned for the master, the storage battery having the smallest battery residual capacity is assigned for the master (S17), and when the storage battery having the largest battery residual capacity is not assigned for the master, the storage battery having the largest battery residual capacity is assigned for the master (S18).

In the determining whether the actual current value of the storage battery having the largest battery residual capacity is the smallest or not, when the actual current value of the storage battery having the largest battery residual capacity is not the smallest, the discharge control circuit 121 also determines whether the storage battery having the largest battery residual capacity is assigned for the master at present or not (S19). As the result of determining, when the storage battery having the largest battery residual capacity is assigned for the master, the storage battery having the largest battery residual capacity is assigned for the master (S20), and when the storage battery having the largest battery residual capacity is not assigned for the master, the storage battery having the smallest battery residual capacity is assigned for the master (S21).

As described above, the storage battery assigned for the master is decided afresh by a series of steps after measuring the battery residual capacity and the actual current value, and the other storage batteries are decided as the slave. The discharge control circuit 121 sets the output current limit value and the output voltage value of the storage battery to the D/A converter 122 depending on to the decided master and slave. As a result, the dischargers control the discharge of each storage battery 100a-110f in accordance with the output current upper limit value and the output voltage value according to the master and slave that has been set here.

After the elapse of a certain period of time since the output current limit value and the output voltage value of the respective storage batteries is set, the discharge control circuit 121 again measures the battery residual capacity and the actual current value of each storage battery (S14). After that, a series of steps for setting the assignment of the master based on the battery residual capacity and the actual current value of each storage battery as described above is repeated in a predetermined time interval. The repeating time interval, for example, can be 30 to 120 seconds, and more preferably 50 to 70 seconds. Time measurement can be performed by counting of a timer incorporated in the discharge control circuit 121. Determining whether the discharge is completed or not can be performed by determining whether the battery voltage of the storage battery is lowered to predetermined voltage or not.

By performing discharge control in the plurality of storage batteries connected in parallel as described above, more power is discharged from the battery having large battery residual capacity and less power is discharged from the battery having small battery residual capacity in terms of results. This enables a balanced discharge so that the battery residual capacities between a plurality of storage batteries become uniform. In addition, a variation in deterioration for each storage battery is reduced since the discharge from a specific storage battery is reduced and the battery residual capacities of all storage batteries are used evenly. Furthermore, the above discharge control can be applied to a case that a precision of external equipment is not so high since it premises that the difference is given between the master ant the slave in the discharge amount.

The method of setting the output current upper limit value and the output voltage value is not limited to the method of the present embodiment, and other methods may be used as long as the difference of the discharge amount between the master and the slave is sufficiently large and the master and the slave are switched appropriately to enable balanced discharge as the result. For example, a method of setting the storage battery assigned for the master to lower output voltage value than that of the other storage batteries while not giving difference in the output current upper limit value, a method of setting the storage battery assigned for the master to higher output current upper limit value in reverse, a method of switching various methods and so on may be applied.

The above embodiment could be applied to a case that a precision of external equipment is not so high since it premises that the difference is given between the master ant the slave in the discharge amount. On the other hand, when a certain degree of the precision can be expected and the difference of the battery residual capacity between the master and the slave is small, it may be possible to make current balance in a proactive manner by adjusting the output voltage value, and further, it may also be possible to combine the method of giving the difference in the discharge amount between the master and the slave.

Further, in the above embodiment, although the master was set based on the battery residual capacity, the battery residual capacity can be calculated from the battery voltage if there is not a situation where the voltage change during the discharge is small. Further, when the charge and discharge characteristics of each storage battery is nearly equal, it may be possible to set the master based on the battery voltage instead of the battery residual capacity since the magnitude of the battery voltage substantially corresponds to the magnitude of the battery residual capacity.

Another embodiment of the present invention comprising steps of setting the master and the slave based on the battery voltage and making current balance in a proactive manner by adjusting the output voltage value when the difference of the battery residual capacities between the master and the slave is small will be described below. In this embodiment, the processing by the discharge control circuit is different from the embodiment described above and the same power storage system shown in FIG. 2 can be used. Therefore, in the following description, the power storage system shown in FIG. 2 is assumed as a system, and the following description will be described as a processing procedure in its discharge control circuit.

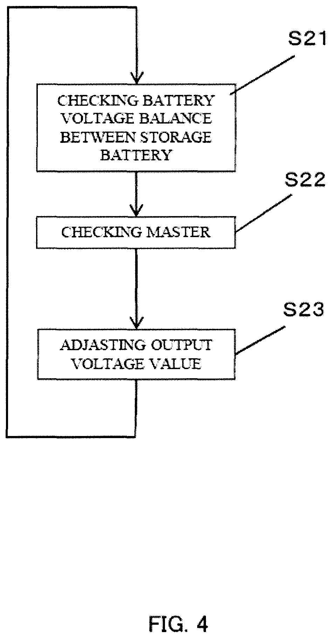

FIG. 4 shows an overall flow of the discharge control according to the present embodiment. As shown in FIG. 4, in this embodiment, first, the battery voltage balance between the storage batteries is confirmed (S 21), and then, the storage battery to be assigned for the master is checked (S22). When the storage battery to be assigned for the master is updated, the adjustment processing of the output voltage value with respect to each storage battery is performed (S23). The series of processes is repeated until the end of discharge in a predetermined time interval. The series of processes, for example, can be repeated at every time a time-out of a timer is occurred; the timer is incorporated in the storage battery device and started after the discharge is started. The repetition period, for example, may be 30-120 seconds, preferably 50-70 seconds.

Each step shown in FIG. 4 will be described in more detail.

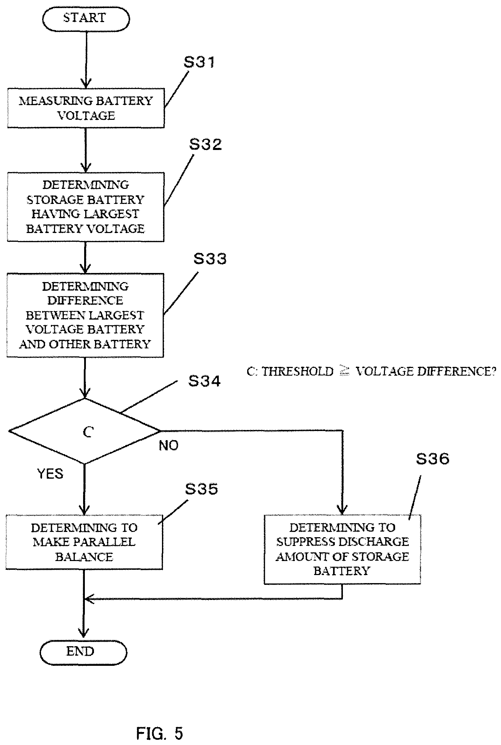

A flow chart of the battery voltage balance confirmation step is shown in FIG 5. In this step, first, the battery voltage of each storage battery is measured (S31). After measuring the battery voltage for all storage batteries, the measured battery voltage of each storage battery is compared, and the storage battery having the largest battery voltage is determined (S32). Then, the difference between the battery voltage of the storage battery having the largest battery voltage and the battery voltage of the other storage batteries is determined (S33).

Then, for each storage battery, whether the determined voltage difference is equal to or less than a predetermined threshold or not (S34). This threshold is held in a memory incorporated in the discharge control circuit or an external memory and can be arbitrarily changed by an operator as needed. The specific values of the thresholds can be determined, for example, based on a charge and discharge characteristics of the storage battery, a degree of aimed balance, accuracy of the discharger and so on and the value can be set appropriately in the range of 1% to 5% of the battery voltage when the storage battery is fully charged. The battery voltage changes depending on the type and the series connection number of unit battery cells constituting each storage battery. For example, when storage battery includes 12 unit battery cells having 4.0V of the fully charged battery voltage connected in series and the threshold is set to 2% of the fully charged battery voltage of the storage battery, that is 48V, the threshold is 0.96V.

As the result of the determination, when the voltage difference is equal to or less than the threshold, it is determined that the storage battery is a storage battery to be made a parallel balance (S35). On the other hand, when the voltage difference is greater than the threshold, it is determined that the storage battery is a storage battery to be suppressed the discharge amount (S36).

As described above, when the parallel balance of the battery voltage is loosed extremely, the battery having relatively low battery voltage is controlled so that it is suppressed the discharge amount. However, the suppression of the discharge amount is performed by adjusting the output voltage value, and the discharge itself is performed.

Referring again to FIG. 4, after the battery voltage balance confirmation step (S 21), a master confirmation step (S22) is performed. In the present embodiment, the storage battery having the largest battery voltage among the plurality of the storage battery is assigned for the master.

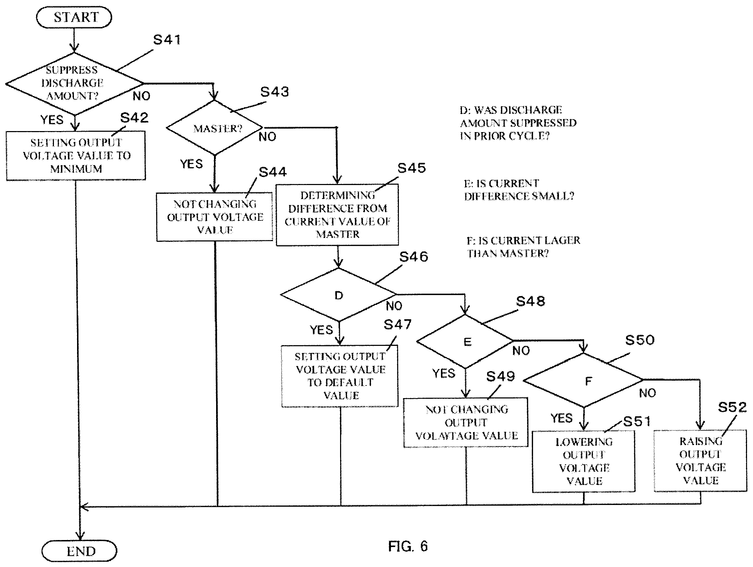

After confirmation of the master storage battery, the output voltage for each storage battery is adjusted based on the determination result of the battery voltage balance (S23). An example of a procedure for adjusting the output voltage value will be described with reference to FIG. 6.

First, whether a storage battery is the storage battery determined to be suppressed the discharge amount or not is determined for each storage battery (S41). In the battery voltage balance confirmation step (S21) shown in FIG. 4, when the value of the voltage difference is equal to or less than the threshold, the storage battery is determined to be the storage battery to be made the parallel balance (S35), and when the value of the voltage difference is greater than the threshold, the result that the storage battery is determined as the battery to be suppressed the discharge amount (S36) can be used.

As the result of the determination, the storage battery determined to be suppressed the discharge amount is set the output voltage value to the minimum voltage value (S42). Here, the discharge control circuit provides two steps of voltage values, which are the default value (for example 48V) and the minimum value (for example 47.5V) lower than the default value as the output voltage value to be set to the storage batteries. The minimum value may be lower about 0.5 ∼ 2V than the default value.

As the result of the determination, the storage battery determined to be made a parallel balance is determined whether it is assigned for the master or not (S43). Since the storage battery assigned for the master has the largest battery voltage, the storage battery in which the battery voltage is equal to or more than that of the other storage batteries is likely to have been assigned for the master. When the storage battery is assigned for the master, the output voltage value being set to the storage battery is not changed (S44). When the storage battery is not assigned for the master, the difference between the actual current value of this storage battery and the actual current value of the storage battery assigned for the master (S45) is determined.

After determining the difference from the actual current value of the master storage battery, it is determined whether the storage battery was the storage battery in which the discharge amount is suppressed in the battery voltage balance confirmation step (S21) in the discharge control processing shown in FIG. 4. As shown in FIG. 4, in the present embodiment, the discharge control processing is executed by repeating the sequence of steps, the object of the determining whether the discharge amount of the storage battery was suppressed or not is not the present cycle but the previous cycle. Then, when the storage battery is the storage battery in which the discharge amount is suppressed at the previous cycle, the output voltage value of the storage battery is set to a default value (for example 48V) (S47).

O the other hand, when the storage battery is not the storage battery in which the discharge amount is suppressed at the previous cycle, then, whether the difference of the actual current values between the master and the slave is within a predetermined range or not is determined (S48). As the result of the determination, when the difference of the actual current values is within the predetermined range, the setting of the output voltage value of the storage battery is not changed (S 49), and when the difference is out of the range, then, whether the actual current value is large than that of the master storage battery or not is determined (S50). The range of the difference of the actual current value can be appropriately set within a range of 5-20% of the maximum discharge current value (for example 10A) of the storage battery.

When the actual current value of the storage battery is larger than that of the master storage battery, the setting of the output voltage value of the storage battery is lowered (S51), when the actual current value is equal to or less than that of the storage battery assigned for the master, the setting of the output voltage value of the storage battery is raised (S52).

By setting the output voltage value for all storage batteries in accordance with the series of steps above described and by discharging with the set output voltage value, the discharge from the storage battery having smaller battery voltage (battery residual capacity) is suppressed and the current balance between the master and the slave in which the difference of their battery voltage is small is improved. As the result, a balanced discharge to make the battery voltage (battery residual capacity) between a plurality of the storage batteries uniform becomes possible. In addition, a variation in deterioration for each storage battery is reduced since the discharge from a specific storage battery is reduced and the battery residual capacities of all storage batteries are used equally.

It is not necessary to perform all series of steps shown in FIG. 6, and at least one step of those can be omitted as required. For example, it is possible to perform only a step of setting the output voltage value to the minimum value for the storage battery determined to be suppressed the discharge amount. Furthermore, in the present embodiment, the output voltage value is changed based on the result of each determining. However, the output current upper limit value may be set, for example, the maximum discharge current value (for example 10A). In addition, in the present embodiment, the determination is based on the battery voltage. However, the determination may be based on the battery residual capacity.

As mentioned above, the present invention has explained according to the representative embodiments. The present invention is not limited to these embodiments. For example, the number of the storage battery is not limited as long as it is two or more. When there are many storage batteries, a plurality of storage batteries can be assigned for the master. When a plurality of storage batteries are assigned for the master, for example, a plurality of the storage battery connected in parallel can be divided into a plurality of blocks equal to the number of the storage batteries to be assigned for the master and the above described discharge control can be performed for each block.

In the above embodiments, the output current upper limit value and the output voltage value set to the storage batteries during the discharge have two steps of values, one is set for the master and another is set for the slave. However, the number of the classification can be increased, for example 3 steps or more, depending on the battery residual capacity (battery voltage) or the actual current value and at least one of the output current upper limit value and the output voltage value can be changed as required.

Further, in the above embodiment, the discharge is performed from all storage battery provided in the storage system. However, it is also possible to determine whether each storage battery is dischargeable or not before starting the discharge and to set the output current value and the output voltage value of the master and other storage batteries among the dischargeable batteries. For example, when the storage battery excessively decreases or increases in temperature, the storage battery sometimes cannot be discharged sufficiently. The same applies when an abnormality is occurred in the discharger. Therefore, it can be possible to determine whether each storage battery is dischargeable or not based on at least one of a temperature measurement result and abnormalities of each discharger.

In addition, when the determination is performed based on the battery residual capacity, the balance control may be performed by considering a remainder subtracted a constant amount from a true battery residual capacity as the battery residual capacity of the storage battery in a case that the capacity of each storage battery at fully charged is not identical and that it wishes to save a part of capacity in a part of storage batteries.

### Explanation of Symbols

- 100a-100f: storage battery
- 110a-110f: discharger
- 120: battery storage device
- 121: discharge control circuit
- 121a: battery residual capacity measuring unit
- 121b: battery voltage measuring unit
- 121c: master assigning unit
- 121d: output voltage setting unit
- 122: D / A converter
- 123: operation amplifier

## Claims

1. A power storage system which supplies power to a load by discharging the power from a storage battery, comprising:
a plurality of storage batteries connected in parallel,
a storage battery device at least setting an output voltage value at discharge to each of the plurality of storage batteries, and
wherein said storage battery device includes,
a discharge control circuit configured to assign at least one storage battery of the plurality of storage batteries for a master based on at least a battery residual capacity or a battery voltage and set the output voltage value so that the output voltage value differs between the master and the other storage batteries.

2. The power storage system according to claim 1, wherein said discharge control circuit updates said storage battery to be assigned for the master every predetermined time.

3. The power storage system according to claim 1 or 2, wherein said discharge control circuit assigns any of said storage battery having the largest battery residual capacity or the largest battery voltage, or said storage battery having the smallest battery residual capacity or the smallest battery voltage for the master.

4. The power storage system according to claim 3, wherein when a discharge amount from said storage battery having the largest battery residual capacity or the largest battery voltage is the smallest, said discharge control circuit assigns said storage battery having the smallest battery residual capacity or the smallest battery voltage for the master when said storage battery having the largest battery residual capacity or the largest battery voltage is the master, and assigns said storage battery having the largest battery residual capacity or the largest battery voltage for the master when said storage battery having the largest battery residual capacity or the largest battery voltage is not the master.

5. The power storage system according to claim 3, wherein when a discharge amount from said storage battery having the largest battery residual capacity or the largest battery voltage is not the smallest, said discharge control circuit assigns again said storage battery having the largest battery residual capacity or the largest battery voltage for the master when said storage battery having the largest battery residual capacity or the largest battery voltage is the master, and assigns said storage battery having the smallest battery residual capacity or the smallest battery voltage for the master when said storage battery having the largest battery residual capacity or the largest battery voltage is not the master.

6. The power storage system according to any one of claims 1 to 5, wherein said discharge control circuit sets the output voltage value to said storage battery assigned for the master, the output voltage value is lower than the output voltage value of other storage batteries, and further, said discharge control circuit sets an output current upper limit value to said storage battery assigned for the master, the output current upper limit value is higher than the output current upper limit value of other storage batteries.

7. The power storage system according to claim 6, wherein said discharge control circuit sets a common output voltage value and a common output current upper limit value to the other storage battery that is not assigned for the master.

8. The power storage system according to claim 1 or 2, wherein said discharge control circuit assigns said storage battery having the largest battery residual capacity or the largest battery voltage among the plurality of storage batteries for the master and sets the output voltage value to the other storage battery that is not assigned for the master corresponding to a magnitude relation to an actual current value of said storage battery that is assigned for the master.

9. The power storage system according to claim 8, wherein said discharge control circuit adjusts the output voltage value such that the discharge amount of said storage batteries that is not assigned for the master is suppressed without depending on the magnitude relation to the actual current value of said storage battery that is assigned for the master when a difference of the battery residual capacity or the battery voltage between said storage battery that is not assigned for the master and said storage battery that is assigned for the master is larger than a predetermined threshold.

10. A discharge control method of a plurality of storage batteries connected in parallel, the method comprises steps of:
assigning at least one storage battery of the plurality of storage batteries to a master based on at least a battery residual capacity or a battery voltage, and
setting at least the output voltage value to each of the plurality of storage batteries so that the output voltage value differs between the master and the other storage batteries.

11. The discharge control method according to claim 10, further comprising the step of updating said storage battery to be assigned for the master every predetermined time.

12. The discharge control method according to claim 10 or 11, wherein the step of assigning the master includes assigning any of said storage battery having the largest battery residual capacity or the largest battery voltage, or said storage battery having the smallest battery residual capacity or the smallest battery voltage to the master.

13. The discharge control method according to claim 12, wherein the step of assigning the master includes, when a discharge amount from said storage battery having the largest battery residual capacity or the largest battery voltage is the smallest, assigning said storage battery having the smallest battery residual capacity or the smallest battery voltage to the master when said storage battery having the largest battery residual capacity or the largest battery voltage is the master, and assigning said storage battery having the largest battery residual capacity or the largest battery voltage to the master when said storage battery having the largest battery residual capacity or the largest battery voltage is not the master.

14. The discharge control method according to claim 12, wherein the step of assigning the master includes, when a discharge amount from said storage battery having the largest battery residual capacity or the largest battery voltage is not the smallest, assigning again said storage battery having the largest battery residual capacity or the largest battery voltage the master when said storage battery having the largest battery residual capacity or the largest battery voltage is the master, and assigning said storage battery having the smallest battery residual capacity or the smallest battery voltage to the master when said storage battery having the largest battery residual capacity or the largest battery voltage is not the master.

15. The discharge control method according to any one of claims 10 to 14, wherein the step of setting at least the output voltage value includes setting the output voltage value to said storage battery assigned for the master, the output voltage value is lower than the output voltage value of other storage batteries, and further setting an output current upper limit value to said storage battery assigned for the master, the output current upper limit value is higher than the output current upper limit value of other storage batteries.

16. The discharge control method according to claim 15, wherein the step of setting the output voltage value and the output current upper limit value includes setting a common output voltage value and a common output current upper limit value to the other storage battery that is not assigned for the master.

17. The discharge control method according to claim 10 or 11, wherein the step of assigning the master includes assigning said storage battery having the largest battery residual capacity or the largest battery voltage among the plurality of storage batteries to the master and the step of setting the output voltage value includes setting the output voltage value to the other storage battery that is not assigned for the master corresponding to a magnitude relation to an actual current value of said storage battery that is assigned for the master.

18. The discharge control method according to claim 17, wherein the step of setting the output voltage value includes adjusting the output voltage value such that the discharge amount of said storage batteries that is not assigned for the master is suppressed without depending on the magnitude relation to the actual current value of said storage battery that is assigned for the master when a difference of the battery residual capacity or the battery voltage between said storage battery that is not assigned for the master and said storage battery that is assigned for the master is larger than a predetermined threshold.
